# EUROPEAN PATENT SPECIFICATION

(11) **EP 3 851 642 B1**
(45) Date of publication and mention of the grant of the patent: **06.03.2024**
(21) Application number: 21152146.3
(22) Date of filing: 18.01.2021
(51) Int. Cl.: F01D 9/02, F01D 11/00

(54) **COMBUSTOR TO VANE SEALING ASSEMBLY AND METHOD OF FORMING SAME**
DICHTUNGSANORDNUNG ZWISCHEN BRENNKAMMER UND SCHAUFEL UND VERFAHREN ZU DEREN HERSTELLUNG
ENSEMBLE D'ÉTANCHÉITÉ ENTRE UNE CHAMBRE DE COMBUSTION ET UNE AUBE ET PROCÉDÉ DE FABRICATION

(30) Priority: 17.01.2020 US 202016746210
(43) Date of publication of application: 21.07.2021
(73) Proprietor: RTX Corporation, Farmington, CT 06032 (US)
(72) Inventor: PORTER, Steven D., Wethersfield, CT 06109 (US); KARANIAN, Caroline, West Hartford, CT 06119 (US); OLS, John T., Northborough, MA 01532 (US)
(74) Representative: Dehns

(56) References cited:
- EP-A1- 3 450 692
- EP-A1- 3 511 622
- US-A- 5 480 162
- US-A- 5 848 874
- US-B1- 6 357 752

## Description

### BACKGROUND

### 1. Technical Field

This disclosure relates generally to gas turbine engines, and more particularly to seal assemblies between combustors and turbine sections of gas turbine engines.

### 2. Background Information

Combustors, such as those used in gas turbine engines, may generally include radially spaced inner and outer shells which define a combustion chamber therebetween. High-energy gas flow generated in the combustion chamber may be directed into a turbine section of the gas turbine engine to effect rotation of one or more turbines. Gas turbine engines may include sealing arrangements between the combustor and the turbine section.

However, some sealing arrangements between the combustor and the turbine section may not adequately make contact with one or both of the combustor or the turbine section during operation of the gas turbine engine. As a result, some amount of leakage may occur between the combustor and cavities adjacent the combustor. Accordingly, what is needed is an improved sealing arrangement between a combustor and a turbine section of a gas turbine engine which addresses one or more of the above-discussed concerns.

EP 3511622 A1 discloses a prior art gas turbine engine comprising a seal assembly which comprises in operation a primary hard seal formed by an annular downstream facing bearing surface of a combustor and an upstream facing bearing surface of a first vane stage and a secondary brush seal.

US 5 480 162 A disclose brush seals that are oriented axially and that include means for transmitting axial loads and are suitable to seal the interface of the combustor and stator of the first stage turbine of a gas turbine engine.

### SUMMARY

According to an aspect of the invention, a gas turbine engine is provided according to claim 1.

In an optional embodiment, the brush seal includes a brush seal backing plate, retaining ring, and a plurality of bristles retained between the brush seal backing plate and the retaining ring.

In an optional embodiment, the plurality of bristles extend axially between the second shell and the forward face of the first vane stage.

In an optional embodiment, the hard seal is disposed radially between the brush seal and the combustion chamber.

In an optional embodiment, the conformal seal includes a wearing end portion extending axially aft from the conformal seal and configured to wear down during initial operation of the gas turbine engine to form the first seal with the forward face of the first vane stage.

In an optional embodiment, the gas turbine engine includes at least one aft liner panel mounted to the second shell radially adjacent the second seal assembly.

In an optional embodiment, the combustor includes a single mounting point between the combustor and a fixed casing structure of the gas turbine engine. The single mounting point is disposed between the second shell and the fixed casing structure.

According to another aspect of the invention, a method for providing a seal between a combustor and a turbine section of a gas turbine engine is provided according to claim 8.

In an optional embodiment, the brush seal includes a brush seal backing plate, retaining ring, and a plurality of bristles retained between the brush seal backing plate and the retaining ring.

In an optional embodiment, the plurality of bristles extends axially between the second shell and the forward face of the first vane stage.

In an optional embodiment, the hard seal is disposed radially between the brush seal and the combustion chamber.

In an optional embodiment, the conformal seal includes a wearing end portion extending axially aft from the conformal seal. The method further includes wearing down the wearing end portion during initial operation of the gas turbine engine to form the first seal with the forward face of the first vane stage.

In an optional embodiment, the combustor further includes at least one aft liner panel mounted to the second shell radially adjacent the second seal assembly.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 illustrates a side cross-sectional view of a gas turbine engine in accordance with one or more embodiments of the present disclosure.
FIG. 2 illustrates a cross-sectional view of an exemplary combustor of a gas turbine engine in accordance with one or more embodiments of the present disclosure.
FIG. 3 illustrates a perspective cutaway view of an outer diameter seal assembly of the combustor of FIG. 2 in accordance with one or more embodiments of the present disclosure.
FIG. 4 illustrates a cross-sectional side view of an inner diameter seal assembly of the combustor of FIG. 2 in accordance with one or more embodiments of the present disclosure.

### DETAILED DESCRIPTION

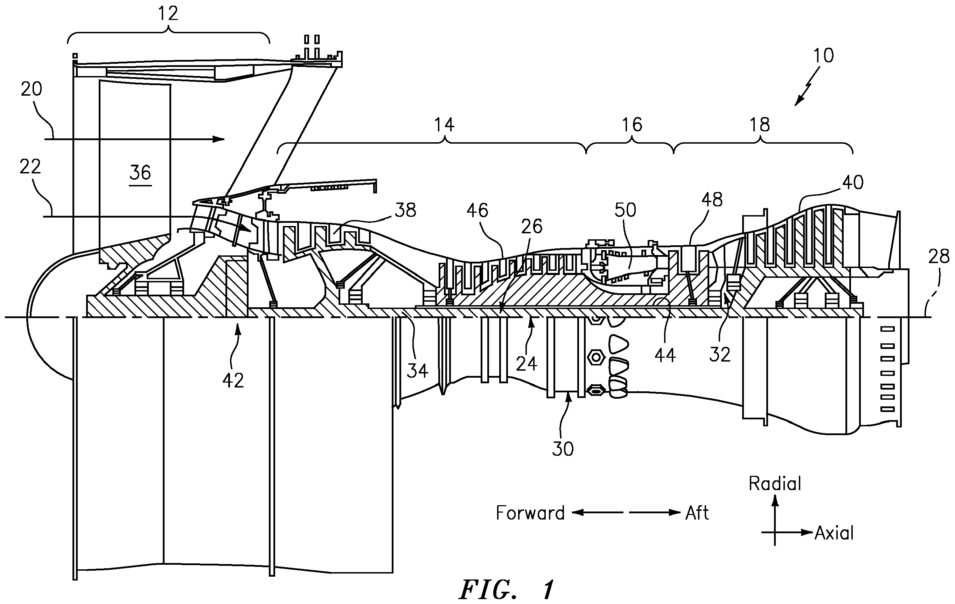

Referring to FIG. 1, an exemplary gas turbine engine 10 is schematically illustrated. The gas turbine engine 10 is disclosed herein as a two-spool turbofan engine that generally includes a fan section 12, a compressor section 14, a combustor section 16, and a turbine section 18. The fan section 12 drives air along a bypass flowpath 20 while the compressor section 14 drives air along a core flowpath 22 for compression and communication into the combustor section 16 and then expansion through the turbine section 18. Although depicted as a turbofan gas turbine engine in the disclosed non-limiting embodiments, it should be understood that the concepts described herein are not limited to use with turbofans as the teachings may be applied to other types of turbine engines including those with three-spool architectures.

The gas turbine engine 10 generally includes a low-pressure spool 24 and a high-pressure spool 26 mounted for rotation about a longitudinal centerline 28 of the gas turbine engine 10 relative to an engine static structure 30 via one or more bearing systems 32. It should be understood that various bearing systems 32 at various locations may alternatively or additionally be provided.

The low-pressure spool 24 generally includes a first shaft 34 that interconnects a fan 36, a low-pressure compressor 38, and a low-pressure turbine 40. The first shaft 34 is connected to the fan 36 through a gear assembly of a fan drive gear system 42 to drive the fan 36 at a lower speed than the low-pressure spool 24. The high-pressure spool 26 generally includes a second shaft 44 that interconnects a high-pressure compressor 46 and a high-pressure turbine 48. It is to be understood that "low pressure" and "high pressure" or variations thereof as used herein are relative terms indicating that the high pressure is greater than the low pressure. An annular combustor 50 is disposed between the high-pressure compressor 46 and the high-pressure turbine 48 along the longitudinal centerline 28. The first shaft 34 and the second shaft 44 are concentric and rotate via the one or more bearing systems 32 about the longitudinal centerline 28 which is collinear with respective longitudinal centerlines of the first and second shafts 34, 44.

Airflow along the core flowpath 22 is compressed by the low-pressure compressor 38, then the high-pressure compressor 46, mixed and burned with fuel in the combustor 50, and then expanded over the high-pressure turbine 48 and the low-pressure turbine 40. The low-pressure turbine 40 and the high-pressure turbine 48 rotationally drive the low-pressure spool 24 and the high-pressure spool 26, respectively, in response to the expansion.

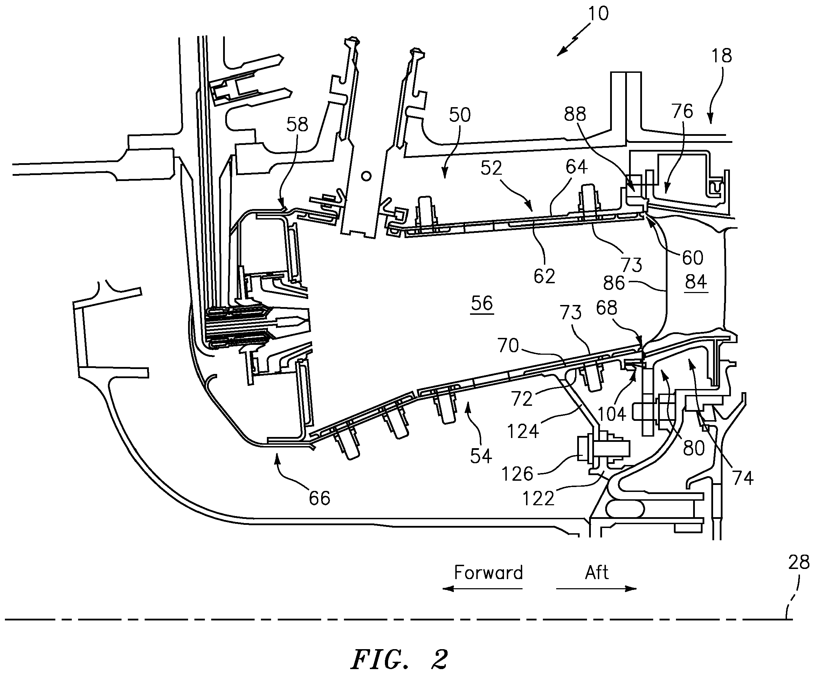

Referring to FIG. 2, the combustor 50 includes an annular outer shell 52 and an annular inner shell 54 spaced radially inward of the outer shell 52, thus defining an annular combustion chamber 56 therebetween. The outer shell 52 includes an axially forward end 58 and an axially aft end 60 as well as a first surface 62 facing the combustion chamber 56 and a second surface 64 opposite the first surface 62. Similarly, the inner shell 54 includes an axially forward end 66 and an axially aft end 68 as well as a first surface 70 facing the combustion chamber 56 and a second surface 72 opposite the first surface 70. The combustor 50 may further include a plurality of liner panels 73 mounted to the respective first surfaces 62, 70 of one or both of the outer shell 52 and the inner shell 54. It should be understood that relative positional terms, such as "forward," "aft," "upper," "lower," "above," "below," and the like are relative to the normal operational attitude of the gas turbine engine 10 and should not be considered otherwise limiting.

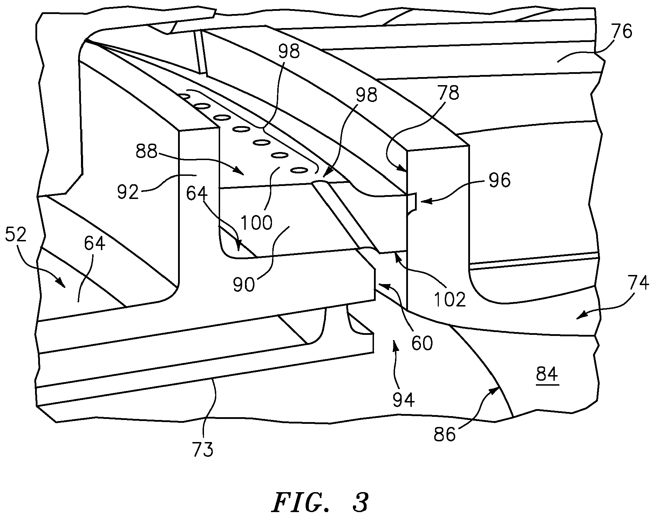

Referring to FIGS. 2-4, the turbine section 18 of the gas turbine engine 10 includes a first vane stage 74 which may be a forward-most vane stage of the turbine section 18. As shown in FIG. 2, the combustor 50 is axially forward of the first vane stage 74 and the combustion chamber 56 is in fluid communication with the first vane stage 74. The first vane stage 74 includes an upper platform 76 which defines an outer diameter forward face 78 of the first vane stage 74 which is adjacent the axially aft end 60 of the outer shell 52. The first vane stage 74 further includes a lower platform 80 which defines an inner diameter forward face 82 of the first vane stage 74 which is adjacent the axially aft end 68 of the inner shell 54.

The first vane stage 74 includes a plurality of vanes 84 that extend between the upper platform 76 and the lower platform 80. Each vane of the plurality of vanes 84 includes a leading edge 86 facing toward the combustion chamber 56. The leading edge 86 encounters the high-energy gas flow generated in the combustion chamber 56 and directs that gas flow further downstream in the turbine section 18.

The outer shell 52 is in sealed communication with the first vane stage 74 via an outer diameter seal assembly 88 disposed at the axially aft end 60 of the outer shell 52. The outer diameter seal assembly 88 includes a conformal seal 90 forming an outer diameter seal between the outer shell 52 and the outer diameter forward face 78 of the first vane stage 74. The outer shell 52 may include a rib 92 which extends radially outward from the second surface 64 of the outer shell 52 and which is axially spaced from the axially aft end 60 of the outer shell 52. The conformal seal 90 may be disposed between the rib 92 and the outer diameter forward face 78 of the first vane stage 74 on the second surface 64 of the outer shell 52. The conformal seal 90 may extend axially aft from the rib 92 over a radially extending gap 94 between the outer shell 52 and the first vane stage 74.

The conformal seal 90 may include a wearing end portion 96 extending axially aft from the conformal seal 90 and configured to wear down during initial operation of the gas turbine engine 10 to form the outer diameter seal with the outer diameter forward face 78 of the first vane stage 74. In various embodiments, the conformal seal 90 may include a plurality of cooling holes 98 which extend between a radially outer surface 100 and a radially inner surface 102 of the conformal seal 90. The plurality of cooling holes 98 may be in fluid communication with the radially extending gap 94 so as to provide cooling air to the radially extending gap 94.

The inner shell 54 is in sealed communication with the first vane stage 74 via an inner diameter seal assembly 104 disposed at the axially aft end 68 of the inner shell 54. The inner diameter seal assembly 104 includes a hard seal 106 forming an inner diameter seal between the inner shell 54 and the inner diameter forward face 82 of the first vane stage 74. The hard seal 106 is defined by a radially extending surface 108 of the inner shell 54 at the axially aft end 68 which is in contact with the inner diameter forward face 82 of the first vane stage 74.

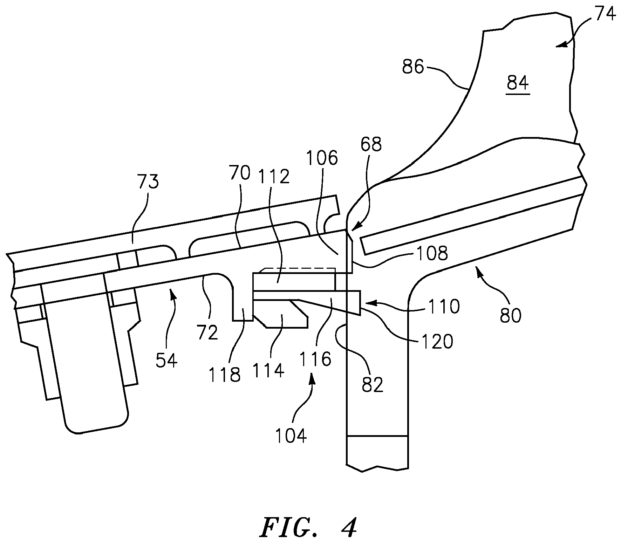

The inner diameter seal assembly 104 includes a brush seal 110 forming an inner diameter seal between the inner shell 54 and the inner diameter forward face 82 of the first vane stage 74. In various embodiments, the inner diameter seal assembly 104 may include both the hard seal 106 forming a first inner diameter seal and the brush seal 110 forming a second inner diameter seal. As shown in FIGS. 2 and 4, the brush seal 110 may be disposed radially inward of the hard seal 106, however, the brush seal 110 is not limited to such a location and may be, for example, disposed radially outward of the hard seal 106.

The brush seal 110 may include a brush seal backing plate 112, a retaining ring 114, and a plurality of bristles 116 radially retained between the brush seal backing plate 112 and the retaining ring 114. The inner shell 54 may include a rib 118 which extends radially inward from the second surface 72 of the inner shell 54 and which is axially spaced from the axially aft end 68 of the inner shell 54. The brush seal 110 may be disposed between the rib 118 and the inner diameter forward face 82 of the first vane stage 74 on the second surface 72 of the inner shell 54. The plurality of bristles 116 may extend axially between the inner shell 54 and the inner diameter forward face 82 of the first vane stage 74 so as to contact the inner diameter forward face 82 with a distal end 120 of the plurality of bristles 116. The brush seal 110 may have improved contact with the inner diameter forward face 82 of the first vane stage 74, as compared to the hard seal 106 and, therefore, may provide greater sealing between the inner shell 54 and the first vane stage 74 relative to an inner diameter seal assembly including a hard seal alone.

While the outer diameter seal assembly 88 is discussed above as including the conformal seal 90 and the inner diameter seal assembly 104 is discussed above as including one or both of the hard seal 106 and the brush seal 110, it should be understood that other configurations of the seals 90, 106, 110 may be used. For example, in various embodiments, the outer diameter seal assembly 88 may include one or both of the hard seal 106 and the brush seal 110 while the inner diameter seal assembly 104 may include the conformal seal 90.

In various embodiments, at least one liner panel of the plurality of liner panels 73, for example, an aft liner panel, may be mounted to the outer shell 52 radially inward (e.g., radially adjacent) of the outer diameter seal assembly 88. In various embodiments, at least one liner panel of the plurality of liner panels 73, for example, an aft liner panel, may be mounted to the inner shell 54 radially outward (e.g., radially adjacent) of the inner diameter seal assembly 104.

In various embodiments, the combustor 50 may include a single mounting point between the combustor 50 and a fixed casing structure 122 of the gas turbine engine 10. For example, the inner shell 54 may include an inner diameter leg 124 extending from the second surface 72 of the inner shell 54 and mounted to the fixed casing structure 122 via one or more fasteners 126. As a result of the single mounting point between the combustor 50 and the fixed casing structure 122, the combustor 50 may experience some rocking and twisting relative to the first vane stage 74 during operation of the gas turbine engine 10. Inclusion of the brush seal 110 in the inner diameter seal assembly 104 may accommodate the rocking and twisting while still provided adequate sealing between the inner shell 54 and the first vane stage 74.

## Claims

1. A gas turbine engine (10) comprising:
a turbine section (18) comprising a first vane stage (74); and
a combustor (50) disposed forward of the first vane stage (74), the combustor (50) comprising a combustion chamber (56) in fluid communication with the first vane stage (74), the combustion chamber (56) radially defined between a first shell (52) and a second shell (54), the first shell (52) comprising a first seal assembly (88) at an aft end (60) of the first shell (52), the first seal assembly (88) comprising a conformal seal (90) forming a first seal between the first shell (52) and a forward face (78) of the first vane stage (74), the second shell (54) comprising a second seal assembly (104) at an aft end (68) of the second shell (54), the second seal assembly (104) comprising a brush seal (110) forming a second seal between the second shell (54) and the forward face (82) of the first vane stage (74);
**characterised in that**:
the second seal is a secondary seal and wherein the second seal assembly (104) further comprises a hard seal (106), the hard seal (106) forming a primary seal between the second shell (54) and the forward face (82) of the first vane stage (74); and
the hard seal (106) comprises a radially extending face (108) of the second shell (54) in contact with the forward face (82) of the first vane stage (74).

2. The gas turbine engine (10) of claim 1, wherein the brush seal (110) comprises a brush seal backing plate (112), retaining ring (114), and a plurality of bristles (116) retained between the brush seal backing plate (112) and the retaining ring (114).

3. The gas turbine engine (10) of claim 2, wherein the plurality of bristles (116) extends axially between the second shell (54) and the forward face (82) of the first vane stage (74).

4. The gas turbine engine (10) of claim 1, 2 or 3, wherein the hard seal (106) is disposed radially between the brush seal (110) and the combustion chamber (56).

5. The gas turbine engine (10) of any preceding claim, wherein the conformal seal (90) comprises a wearing end portion (96) extending axially aft from the conformal seal (90) and configured to wear down during initial operation of the gas turbine engine (10) to form the first seal with the forward face (78) of the first vane stage (74).

6. The gas turbine engine (10) of any preceding claim, further comprising at least one aft liner panel (73) mounted to the second shell (54) radially adjacent the second seal assembly (104).

7. The gas turbine engine (10) of any preceding claim, wherein the combustor (50) comprises a single mounting point between the combustor (50) and a fixed casing structure (122) of the gas turbine engine (10), the single mounting point disposed between the second shell (54) and the fixed casing structure (122).

8. A method for providing a seal between a combustor (50) and a turbine section (18) of a gas turbine engine (10), the method comprising:
providing the combustor (50) comprising a combustion chamber (56) radially defined between a first shell (52) and a second shell (54);
forming a first seal between an aft end (60) of the first shell (52) and a forward face (78) of a first vane stage (74) of the turbine section (18) with a first seal assembly (88) comprising a conformal seal (90); and
forming a second seal between an aft end (68) of the second shell (54) and the forward face (82) of the first vane stage (74) of the turbine section (18) with a second seal assembly (104) comprising a brush seal (110);
**characterised in that**:
the second seal is a secondary seal and wherein the second seal assembly (104) further comprises a hard seal (106), the method further comprising forming a primary seal between the second shell (54) and the forward face (82) of the first vane stage (74) with the hard seal (106); and
the hard seal (106) comprises a radially extending face (108) of the second shell (54) in contact with the forward face (82) of the first vane stage (74).

9. The method of claim 8, wherein the brush seal (110) comprises a brush seal backing plate (112), retaining ring (114), and a plurality of bristles (116) retained between the brush seal backing plate (112) and the retaining ring (114).

10. The method of claim 9, wherein the plurality of bristles (116) extends axially between the second shell (54) and the forward face (82) of the first vane stage (74).

11. The method of claim 8, 9 or 10, wherein the hard seal (106) is disposed radially between the brush seal (110) and the combustion chamber (56).

12. The method of any of claims 8 to 11, wherein the conformal seal (90) comprises a wearing end portion (96) extending axially aft from the conformal seal (90), the method further comprising wearing down the wearing end portion (96) during initial operation of the gas turbine engine (10) to form the first seal with the forward face (78) of the first vane stage (74).

13. The method of any of claims 8 to 12, wherein the combustor (50) further comprises at least one aft liner panel (73) mounted to the second shell (54) radially adjacent the second seal assembly (104).

## Patentansprüche

1. Gasturbinentriebwerk (10), Folgendes umfassend:
einen Turbinenabschnitt (18), umfassend eine erste Schaufelstufe (74); und
eine Brennkammer (50), die vor der ersten Schaufelstufe (74) angeordnet ist, wobei die Brennkammer (50) eine Verbrennungskammer (56) in Fluidverbindung mit der ersten Schaufelstufe (74) umfasst, wobei die Verbrennungskammer (56) radial zwischen einer ersten Schale (52) und einer zweiten Schale (54) definiert ist, wobei die erste Schale (52) eine erste Dichtungsanordnung (88) an einem hinteren Ende (60) der ersten Schale (52) umfasst, die erste Dichtungsanordnung (88) eine konforme Dichtung (90) umfasst, die eine erste Dichtung zwischen der ersten Schale (52) und einer vorderen Fläche (78) der ersten Schaufelstufe (74) bildet, wobei die zweite Schale (54) eine zweite Dichtungsanordnung (104) an einem hinteren Ende (68) der zweiten Schale (54) umfasst, wobei die zweite Dichtungsanordnung (104) eine Bürstendichtung (110) umfasst, die eine zweite Dichtung zwischen der zweiten Schale (54) und der vorderen Fläche (82) der ersten Schaufelstufe (74) bildet;
**dadurch gekennzeichnet, dass**:
die zweite Dichtung eine Sekundärdichtung ist und wobei die zweite Dichtungsanordnung (104) ferner eine Hartdichtung (106) umfasst, wobei die Hartdichtung (106) eine Primärdichtung zwischen der zweiten Schale (54) und der vorderen Fläche (82) der ersten Schaufelstufe (74) bildet; und
die Hartdichtung (106) eine sich radial erstreckende Fläche (108) der zweiten Schale (54) in Kontakt mit der vorderen Fläche (82) der ersten Schaufelstufe (74) umfasst.

2. Gasturbinentriebwerk (10) nach Anspruch 1, wobei die Bürstendichtung (110) eine Bürstendichtungsstützplatte (112), einen Haltering (114) und eine Vielzahl von Borsten (116) umfasst, die zwischen der Bürstendichtungsstützplatte (112) und dem Haltering (114) gehalten werden.

3. Gasturbinentriebwerk (10) nach Anspruch 2, wobei sich die Vielzahl der Borsten (116) axial zwischen der zweiten Schale (54) und der vorderen Fläche (82) der ersten Schaufelstufe (74) erstreckt.

4. Gasturbinentriebwerk (10) nach Anspruch 1, 2 oder 3, wobei die Hartdichtung (106) radial zwischen der Bürstendichtung (110) und der Verbrennungskammer (56) angeordnet ist.

5. Gasturbinentriebwerk (10) nach einem der vorhergehenden Ansprüche, wobei die konforme Dichtung (90) einen Verschleißendabschnitt (96) umfasst, der sich axial nach hinten von der konformen Dichtung (90) aus erstreckt und konfiguriert ist, um sich während des anfänglichen Betriebs des Gasturbinentriebwerks (10) abzunutzen, um die erste Dichtung mit der vorderen Fläche (78) der ersten Schaufelstufe (74) zu bilden.

6. Gasturbinentriebwerk (10) nach einem der vorhergehenden Ansprüche, das ferner mindestens eine hintere Auskleidungsplatte (73) umfasst, die an der zweiten Schale (54) radial benachbart zu der zweiten Dichtungsanordnung (104) montiert ist.

7. Gasturbinentriebwerk (10) nach einem der vorhergehenden Ansprüche, wobei die Brennkammer (50) einen einzelnen Montagepunkt zwischen der Brennkammer (50) und einer fixierten Gehäusestruktur (122) des Gasturbinentriebwerks (10) umfasst, wobei der einzelne Montagepunkt zwischen der zweiten Schale (54) und der fixierten Gehäusestruktur (122) angeordnet ist.

8. Verfahren zum Bereitstellen einer Dichtung zwischen einer Brennkammer (50) und einem Turbinenabschnitt (18) eines Gasturbinentriebwerks (10), wobei das Verfahren Folgendes umfasst:
Bereitstellen der Brennkammer (50), die eine Verbrennungskammer (56) umfasst, die radial zwischen einer ersten Schale (52) und einer zweiten Schale (54) definiert ist;
Bilden einer ersten Dichtung zwischen einem hinteren Ende (60) der ersten Schale (52) und einer vorderen Fläche (78) einer ersten Schaufelstufe (74) des Turbinenabschnitts (18) mit einer ersten Dichtungsanordnung (88), die eine konforme Dichtung (90) umfasst; und
Bilden einer zweiten Dichtung zwischen einem hinteren Ende (68) der zweiten Schale (54) und einer vorderen Fläche (82) einer ersten Schaufelstufe (74) des Turbinenabschnitts (18) mit einer zweiten Dichtungsanordnung (104), die eine Bürstendichtung (110) umfasst;
**dadurch gekennzeichnet, dass**:
die zweite Dichtung eine Sekundärdichtung ist und wobei die zweite Dichtungsanordnung (104) ferner eine Hartdichtung (106) umfasst, wobei das Verfahren ferner das Bilden einer Primärdichtung zwischen der zweiten Schale (54) und der vorderen Fläche (82) der ersten Schaufelstufe (74) mit der Hartdichtung (106) umfasst; und
die Hartdichtung (106) eine sich radial erstreckende Fläche (108) der zweiten Schale (54) in Kontakt mit der vorderen Fläche (82) der ersten Schaufelstufe (74) umfasst.

9. Verfahren nach Anspruch 8, wobei die Bürstendichtung (110) eine Bürstendichtungsstützplatte (112), einen Haltering (114) und eine Vielzahl von Borsten (116) umfasst, die zwischen der Bürstendichtungsstützplatte (112) und dem Haltering (114) gehalten werden.

10. Verfahren nach Anspruch 9, wobei sich die Vielzahl der Borsten (116) axial zwischen der zweiten Schale (54) und der vorderen Fläche (82) der ersten Schaufelstufe (74) erstreckt.

11. Verfahren nach Anspruch 8, 9 oder 10, wobei die Hartdichtung (106) radial zwischen der Bürstendichtung (110) und der Verbrennungskammer (56) angeordnet ist.

12. Verfahren nach einem der Ansprüche 8 bis 11, wobei die konforme Dichtung (90) einen Verschleißendabschnitt (96) umfasst, der sich axial nach hinten von der konformen Dichtung (90) aus erstreckt, wobei das Verfahren ferner das Abnutzen des Verschleißendabschnitts (96) während des anfänglichen Betriebs des Gasturbinentriebwerks (10) umfasst, um die erste Dichtung mit der vorderen Fläche (78) der ersten Schaufelstufe (74) zu bilden.

13. Verfahren nach einem der Ansprüche 8 bis 12, wobei die Brennkammer (50) ferner mindestens eine hintere Auskleidungsplatte (73) umfasst, die an der zweiten Schale (54) radial benachbart zu der zweiten Dichtungsanordnung (104) montiert ist.

## Revendications

1. Moteur à turbine à gaz (10) comprenant :
une section de turbine (18) comprenant un premier étage d'aubes (74) ; et
une chambre de combustion (50) disposée en avant du premier étage d'aubes (74), la chambre de combustion (50) comprenant une chambre à combustion (56) en communication fluidique avec le premier étage d'aubes (74), la chambre à combustion (56) étant définie radialement entre une première coque (52) et une seconde coque (54), la première coque (52) comprenant un premier ensemble joint (88) au niveau d'une extrémité arrière (60) de la première coque (52), le premier ensemble joint (88) comprenant un joint conforme (90) formant un premier joint entre la première coque (52) et une face avant (78) du premier étage d'aubes (74), la seconde coque (54) comprenant un second ensemble joint (104) au niveau d'une extrémité arrière (68) de la seconde coque (54), le second ensemble joint (104) comprenant un joint à brosse (110) formant un second joint entre la seconde coque (54) et la face avant (82) du premier étage d'aubes (74) ;
**caractérisé en ce que** :
le second joint est un joint secondaire et dans lequel le second ensemble joint (104) comprend en outre un joint dur (106), le joint dur (106) formant un joint principal entre la seconde coque (54) et la face avant (82) du premier étage d'aubes (74) ; et
le joint dur (106) comprend une face s'étendant radialement (108) de la seconde coque (54) en contact avec la face avant (82) du premier étage d'aubes (74).

2. Moteur à turbine à gaz (10) selon la revendication 1, dans lequel le joint à brosse (110) comprend une plaque de support de joint à brosse (112), une bague de retenue (114) et une pluralité de poils (116) retenus entre la plaque de support de joint à brosse (112) et la bague de retenue (114).

3. Moteur à turbine à gaz (10) selon la revendication 2, dans lequel la pluralité de poils (116) s'étendent axialement entre la seconde coque (54) et la face avant (82) du premier étage d'aubes (74) .

4. Moteur à turbine à gaz (10) selon la revendication 1, 2 ou 3, dans lequel le joint dur (106) est disposé radialement entre le joint à brosse (110) et la chambre à combustion (56).

5. Moteur à turbine à gaz (10) selon une quelconque revendication précédente, dans lequel le joint conforme (90) comprend une partie d'extrémité d'usure (96) s'étendant axialement vers l'arrière du joint conforme (90) et configurée pour s'user pendant le fonctionnement initial du moteur à turbine à gaz (10) pour former le premier joint avec la face avant (78) du premier étage d'aubes (74).

6. Moteur à turbine à gaz (10) selon une quelconque revendication précédente, comprenant en outre au moins un panneau de revêtement arrière (73) monté sur la seconde coque (54) radialement adjacent au second ensemble joint (104).

7. Moteur à turbine à gaz (10) selon une quelconque revendication précédente, dans lequel la chambre de combustion (50) comprend un point de montage unique entre la chambre de combustion (50) et une structure de carter fixe (122) du moteur à turbine à gaz (10), le point de montage unique étant disposé entre la seconde coque (54) et la structure de carter fixe (122).

8. Procédé de fourniture d'un joint entre une chambre de combustion (50) et une section de turbine (18) d'un moteur à turbine à gaz (10), le procédé comprenant :
la fourniture de la chambre de combustion (50) comprenant une chambre à combustion (56) définie radialement entre une première coque (52) et une seconde coque (54) ;
la formation d'un premier joint entre une extrémité arrière (60) de la première coque (52) et une face avant (78) d'un premier étage d'aubes (74) de la section de turbine (18) avec un premier ensemble joint (88) comprenant un joint conforme (90) ; et
la formation d'un second joint entre une extrémité arrière (68) de la seconde coque (54) et la face avant (82) du premier étage d'aubes (74) de la section de turbine (18) avec un second ensemble joint (104) comprenant un joint à brosse (110) ;
**caractérisé en ce que** :
le second joint est un joint secondaire et dans lequel le second ensemble joint (104) comprend en outre un joint dur (106), le procédé comprenant en outre la formation d'un joint principal entre la seconde coque (54) et la face avant (82) du premier étage d'aubes (74) avec le joint dur (106) ; et
le joint dur (106) comprend une face s'étendant radialement (108) de la seconde coque (54) en contact avec la face avant (82) du premier étage d'aubes (74).

9. Procédé selon la revendication 8, dans lequel le joint à brosse (110) comprend une plaque de support de joint à brosse (112), une bague de retenue (114) et une pluralité de poils (116) retenus entre la plaque de support de joint à brosse (112) et la bague de retenue (114).

10. Procédé selon la revendication 9, dans lequel la pluralité de poils (116) s'étendent axialement entre la seconde coque (54) et la face avant (82) du premier étage d'aubes (74).

11. Procédé selon la revendication 8, 9 ou 10, dans lequel le joint dur (106) est disposé radialement entre le joint à brosse (110) et la chambre à combustion (56).

12. Procédé selon l'une quelconque des revendications 8 à 11, dans lequel le joint conforme (90) comprend une partie d'extrémité d'usure (96) s'étendant axialement vers l'arrière du joint conforme (90), le procédé comprenant en outre l'usure de la partie d'extrémité d'usure (96) pendant le fonctionnement initial du moteur à turbine à gaz (10) pour former le premier joint avec la face avant (78) du premier étage d'aubes (74).

13. Procédé selon l'une quelconque des revendications 8 à 12, dans lequel la chambre de combustion (50) comprend en outre au moins un panneau de revêtement arrière (73) monté sur la seconde coque (54) radialement adjacent au second ensemble joint (104).
